(19) **Europäisches Patentamt**

**European Patent Office**

**Office européen des brevets**

(11) **EP 0 831 336 B1**

(12) **FASCICULE DE BREVET EUROPEEN**

(45) Date de publication et mention
de la délivrance du brevet:
**16.01.2002   Bulletin 2002/03**

(51) Int Cl.⁷: **G01S 13/60**

(21) Numéro de dépôt: **97460038.9**

(22) Date de dépôt: **18.09.1997**

(54) **Appareil de mesure de la vitesse de course d'un sportif**

Vorrichtung zum Messen der Laufgeschwindigkeit eines Sportlers

Apparatus for measuring the running speed of an athlete

(84) Etats contractants désignés:
**CH DE LI**

(30) Priorité: **18.09.1996   FR 9611576**

(43) Date de publication de la demande:
**25.03.1998   Bulletin 1998/13**

(73) Titulaire: **Critt Electronique et Communication
22304 Lannion (FR)**

(72) Inventeur: **Dupuis, Philippe
22700 Perros-Guirec (FR)**

(74) Mandataire: **Maillet, Alain
SCP Le Guen & Maillet, 5, Place Newquay, B.P. 70250
35802 Dinard Cedex (FR)**

(56) Documents cités:
**DE-A- 4 428 663          FR-A- 2 663 434
US-A- 4 914 638**

**Description**

La présente invention concerne un appareil pour effectuer la mesure de la vitesse de course d'un sportif, tel qu'un coureur à pied ou un marcheur.

Pour effectuer des mesures de vitesse d'un mobile, il est connu d'utiliser un appareil à effet Doppler. De manière générale, on utilise soit un appareil fixe visant le mobile et l'on mesure la vitesse du mobile par rapport à cet appareil, soit un appareil embarqué et visant le sol et, on mesure la vitesse du mobile par rapport au sol. On s'intéresse dans la présente invention au second cas de l'appareil embarqué.

L'appareil de la présente invention est ainsi du type qui délivre un signal Doppler à partir d'au moins un faisceau émis et d'au moins un faisceau reçu correspondant audit ou à chaque faisceau émis qui est rétrodiffusé sur le sol.

On connaît déjà, notamment par le document de brevet WO-A-88 02494, un tel appareil pour effectuer la mesure de la vitesse de course d'un skieur, lequel porte sur sa hanche ledit appareil. Ce dernier comprend un émetteur prévu pour émettre, au moyen d'une antenne guide d'ondes, une onde électromagnétique de haute fréquence, pouvant être comprise entre 3 et 100 gigahertz. Cette émission est effectuée dans une direction formant un angle de 45° avec la verticale et ce vers le milieu sur lequel évolue le skieur. Un récepteur également relié à la même antenne est prévu pour recevoir l'onde rétrodiffusée sur le milieu et est relié à l'entrée d'un calculateur prévu pour déterminer la vitesse du skieur directement à partir du déplacement Doppler de la fréquence de l'onde rétrodiffusée par rapport à l'onde émise.

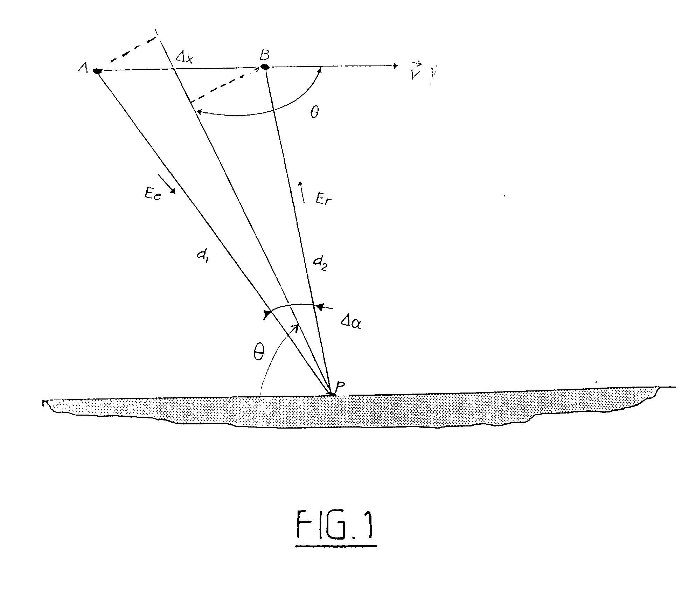

Pour expliquer le fonctionnement d'un tel appareil, on va considérer le schéma de la Fig. 1 sur lequel on peut voir deux points A et B séparés par une distance $\Delta$ x. Au point A une onde Ee de longueur d'onde $\lambda_{HF}$ est émise et au point B, cette onde Er qui a été réfléchie sur le sol au point P est reçue. Entre les ondes Ee et Er, il y a un déphasage $\varphi$ qui, pour les besoins de la démonstration, est considéré comme étant égal à $2\pi$. On peut montrer que la distance Ax est alors donnée par la relation suivante:

$$\Delta x = \lambda_{HF} / 2.\cos \theta$$

où $\theta$ est l'angle que forment entre eux la direction du faisceau incident émis par l'appareil et le vecteur vitesse V du mobile. On notera que l'angle $\theta$ est également l'angle formé entre la direction du faisceau incident et le sol.

Le signal résultant du mélange des deux ondes Ee et Er respectivement émise et reçue dont on a de plus filtré la composante haute fréquence est le signal Doppler et a une amplitude qui est donnée par la relation suivante:

$$Sd = E_0 \cos \varphi$$

où $\varphi$ représente le déphasage entre les ondes Ee et Er. Cette expression montre que le signal Doppler est un signal périodique dont la période est celle du déphasage $\varphi$.

Or, par hypothèse, la période Doppler est la durée pour passer du point A au point B, soit:

$$Td = \Delta x/V$$

soit en considérant l'expression ci-dessus:

$$Td = \lambda_{HF} / V.\cos\theta$$

La fréquence Doppler est donc donnée par l'expression suivante:

$$Fd = 2. V \cos \theta / \lambda_{HF}.$$

Elle est directement proportionnelle à la vitesse d'avancement du mobile. Il est donc possible de connaître cette vitesse par la mesure de la fréquence Fd. Cependant, on peut constater que la fréquence Doppler dépend aussi de l'angle $\theta$, c'est-à-dire de l'angle $\theta$ qui est formé entre la direction du faisceau incident émis par l'appareil et le vecteur vitesse V du mobile.

Ceci pose un problème lorsque le mobile est amené à modifier cet angle $\theta$. Par exemple, dans le document de brevet mentionné ci-dessus WO-A-88 02494 concernant la mesure de la vitesse de course d'un skieur, l'appareil de mesure est monté sur la hanche du skieur. Lorsque celui-ci bascule vers l'avant ou vers l'arrière, il modifie l'inclinaison du faisceau incident par rapport au sol, ce qui entraîne une modification de l'angle entre le faisceau incident et le vecteur vitesse V, c'est-à-dire l'angle θ de la Fig. 1. On comprendra que la mesure de la vitesse est alors perturbée. On a ainsi pu constater qu'un degré d'inclinaison de la hanche se traduit approximativement par une erreur de 1 % sur la mesure de la vitesse.

Il s'ensuit que les appareils de l'art antérieur sont limités à des applications où le mobile se déplace horizontalement, et où l'appareil peut être placé et incliné de manière quasi-stable par rapport au sol. Le champ de ces applications est ainsi limité.

La présente invention propose un appareil de mesure de la vitesse de course d'un sportif qui permette de résoudre le problème évoqué ci-dessus.

A cet effet et selon une première caractéristique essentielle de l'invention, ledit appareil est prévu, d'une part, pour être monté de manière fixe sur une partie du corps dudit sportif qui est normalement animée lors de ladite course d'un mouvement cyclique décrit par un vecteur vitesse changeant au moins en module et, d'autre part, pour déterminer à chaque période à partir dudit signal Doppler la valeur maximale du module dudit vecteur vitesse afin d'en déduire la vitesse de course dudit sportif

Selon une variante de cette première caractéristique, ledit appareil est prévu, d'une part, pour être monté sur ou dans une chaussure dudit sportif et, d'autre part, pour déterminer à chaque période à partir dudit signal Doppler la valeur maximale du module du vecteur vitesse dont est animée ladite chaussure lors de ladite course afin d'en déduire la vitesse de course dudit sportif.

Selon une autre caractéristique de l'invention, il est prévu pour émettre deux faisceaux dans un plan contenant la direction d'avancement dudit sportif. Par exemple, le signal Doppler est déterminé à partir des fréquences Doppler respectivement dues auxdits faisceaux, par la relation :

$$Fd \;=\; \frac{2V}{\lambda} \;=\; \sqrt{Fdav^{\,2} + \left(\frac{Fdav.\cos\alpha - Fdar}{\sin\alpha}\right)^{2}}$$

où $\alpha$ est l'angle formé entre lesdits deux faisceaux, Fdav et Fdar les signaux Doppler correspondant respectivement auxdits deux faisceaux. Avantageusement, lesdits deux faisceaux forment entre eux un angle de π/2.

Selon une autre caractéristique de l'invention, pour déduire la vitesse de course dudit sportif du module de la vitesse maximale, ledit appareil est prévu pour utiliser la relation affine suivante :

$$V_{av} = a\,V_{max} + b$$

Avantageusement, a est sensiblement égal à 0,6 et b est sensiblement égal à -0,4.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

la Fig. 1 est un schéma montrant le principe d'un appareil à effet Doppler et illustrant la détermination de l'expression du signal Doppler,

la Fig. 2 est un schéma synoptique d'un appareil selon l'invention,

la Fig. 3 est un schéma similaire à celui de la Fig. 1 dans lequel le vecteur vitesse présente une direction arbitraire,

la Fig. 4 montre un premier mode de réalisation de l'appareil selon l'invention,

la Fig. 5 représente le signal Doppler en fonction du temps obtenu avec un appareil selon le premier mode de réalisation représenté à la Fig. 4,

la Fig. 6 montre la relation affine qui existe entre la vitesse maximale déterminée à partir du signal Doppler et la vitesse de course du porteur de l'appareil,

la Fig. 7 montre un second mode de réalisation de l'appareil selon l'invention,

la Fig. 8 représente le signal Doppler en fonction du temps obtenu avec un appareil selon le second mode de réalisation représenté à la Fig. 7, et

la Fig.9 montre la relation affine qui existe entre la vitesse maximale déterminée à partir du signal Doppler et la vitesse de course du porteur de l'appareil.

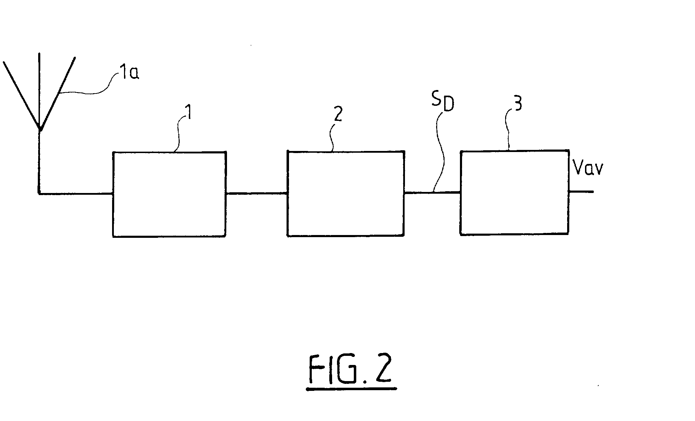

De manière générale, un appareil de mesure selon l'invention est du type qui délivre un signal Doppler à partir d'au moins un faisceau émis et d'au moins un faisceau reçu correspondant audit ou à chaque faisceau émis qui est rétrodiffusé sur le sol. Le schéma synoptique d'un tel appareil est représenté à la Fig. 2. Il est constitué d'une tête hyperfréquence 1 qui est pourvue d'une antenne émission/réception la et dont la sortie est reliée à une unité de pré-traitement 2. Comme cela est connu dans le domaine de la technique, la tête hyperfréquence 1 est constituée, outre l'antenne la, d'une transition et d'une cavité telle qu'une cavité MACOM. Cette cavité est montée sur la transition et constitue, d'une part, un émetteur fonctionnant à une fréquence avantageuse de 24,125 GHz, par exemple à diode GUNN et délivrant l'onde générée à l'antenne 1a L'onde rétrodiffusée et reçue par l'antenne la est mélangée par exemple au moyen d'une diode Schottky. L'onde résultant, d'une part, du mélange de l'onde émise et de l'onde réfléchie et, d'autre part, d'une préamplification et d'un filtrage des hautes fréquences effectués par l'unité de pré-traitement 2 constitue le signal Doppler dont la fréquence correspond au déplacement en fréquence de l'onde rétrodiffusée par rapport à celle de l'onde émise.

L'appareil de l'invention comprend de plus une unité de traitement 3 qui est prévue pour délivrer à partir du signal Doppler un signal représentatif de la vitesse d'avancement $V_{av}$.

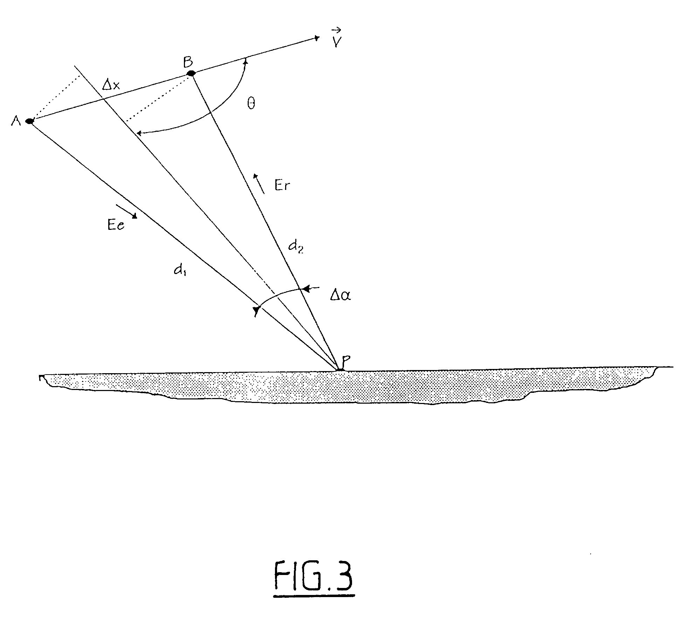

On va considérer le schéma de la Fig. 3 similaire à celui de la Fig. 1 mais dans lequel le vecteur vitesse V présente une direction arbitraire différente de l'horizontale.

Par un raisonnement et une démonstration similaire à celle qui a été faite en relation avec la Fig. 1, on peut montrer que la fréquence Doppler est donnée par la relation suivante:

$$Fd = 2\ V \cos \theta\ /\ \lambda_{HF}$$

L'angle $\theta$ est l'angle que forment entre elles la direction du vecteur vitesse V et la direction du faisceau émis par le radar. On peut constater que la fréquence Doppler dépend en fait, d'une part, de l'angle $\theta$ et, d'autre part, du module du vecteur vitesse V ou amplitude du vecteur vitesse.

Partant de cette constatation, le présent demandeur a pensé, pour pouvoir mesurer la vitesse de course d'un sportif, à monter un appareil de mesure tel qu'il vient d'être décrit en relation avec la Fig. 2 de manière fixe sur une partie du corps dudit sportif, ladite partie devant être normalement animée lors de ladite course d'un mouvement cyclique décrit par un vecteur vitesse changeant en module et éventuellement en direction.

Dans les exemples de réalisation qui sont décrits, ledit appareil est monté sur ou dans une chaussure d'un coureur à pied. A chaque double-pas, le mouvement du pied du coureur se reproduit formant ainsi un mouvement cyclique dont le vecteur vitesse change aussi bien en module qu'en direction.

L'invention s'applique à toute partie du corps du coureur qui forme un tel mouvement cyclique, par exemple sur un bras qui effectue lui aussi un mouvement cyclique à chaque double pas.

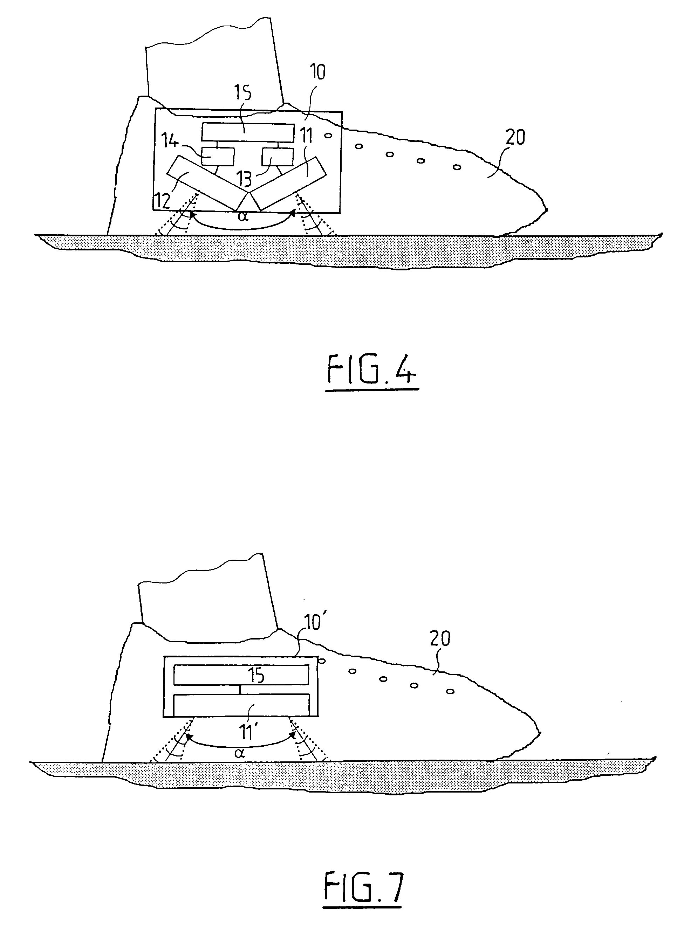

On a représenté à la Fig. 4 un premier mode de réalisation de l'invention. Comme on peut le constater l'appareil de mesure 10 est monté sur une chaussure 20 du coureur et il comprend en réalité deux antennes 11 et 12 respectivement reliées à deux unités Doppler 13 et 14. Chaque unité Doppler 13 et 14 délivre un signal Doppler Fdav, Fdar qui est alors fourni à une unité de traitement et d'acquisition 15. Les faisceaux émis par les deux antennes 11 et 12 sont contenus dans un même plan vertical qui contient également la direction de course du coureur. Alors que l'antenne 11 a son faisceau incident qui est dirigé vers l'avant de la chaussure 20, l'antenne 12 a son faisceau incident qui est dirigé vers l'arrière de la chaussure 20. L'angle que forment entre eux les deux faisceaux respectivement émis par les deux antennes 11 et 12 est $\alpha$.

L'unité 15 détermine le signal Doppler FD à partir du signal Doppler Fdav correspondant à l'antenne avant 11 et le signal Doppler Fdar correspondant à l'antenne 12 dirigée vers l'arrière. On peut montrer que les fréquences Doppler Fdav et Fdar prennent les valeurs respectivement données par les relations suivantes:

$$Fdav = 2.V.\cos \theta\ /\ \lambda$$

et

$$Fdar = 2.V.\cos(\theta+\alpha)/\lambda$$

La résultante de la fréquence Doppler est donc égale à :

$$Fd = \frac{2V}{\lambda} = \sqrt{Fdav^2 + \left(\frac{Fdav.\cos\alpha - Fdar}{\sin\alpha}\right)^2}$$

où V est la vitesse réelle du pied.

Lorsque la valeur de l'angle $\alpha$ est égale à $\pi/2$, cette expression se simplifie et la fréquence Doppler devient égale à :

$$FD = (Fdav^2 + Fdar^2)^{1/2}$$

On peut également montrer que la valeur de l'angle $\theta$ entre l'axe du faisceau émis par l'antenne 11 et le vecteur vitesse est également donnée par la relation suivante :

$$\theta = \arccos(Fdav/FD)$$

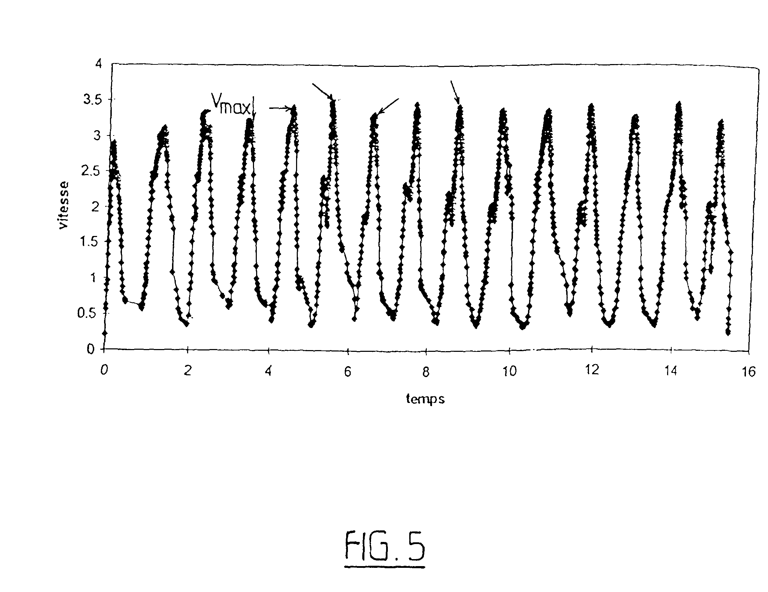

On a représenté à la Fig. 5 une courbe montrant le module de la vitesse réelle du pied qui a pu être ainsi mesurée et ce en fonction du temps pour une vitesse de course de 1,56 m/s (5,62 km/h). On constate que chaque double pas est bien marqué et que l'on peut à la fois mesurer la durée d'un double pas et la vitesse maximale atteinte à chaque double pas.

Selon l'invention, on détermine le module de la vitesse maximale atteinte à chaque cycle et on en déduit la vitesse de course du sportif. On a marqué par des flèches sur la Fig. 5 les points considérés de la courbe.

La déduction de la vitesse de course dudit sportif à partir du module de la vitesse maximale peut se faire de différentes manières. On peut par exemple citer une déduction qui serait réalisée à partir d'une table mémorisée dans ledit appareil dont les valeurs seraient obtenues empiriquement, lors par exemple d'essais ou de périodes d'étalonnage.

Néanmoins, selon une autre caractéristique de l'invention, on déduit la vitesse de course dudit sportif à partir du module de la vitesse maximale en utilisant la relation affine suivante :

$$V_{av} = a\, V_{max} + b$$

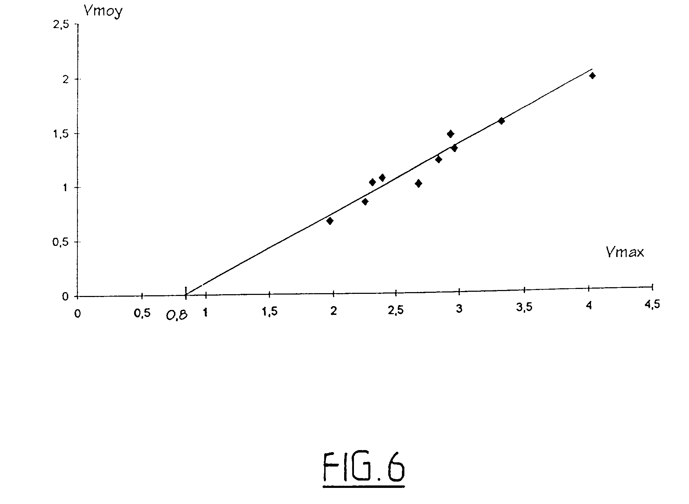

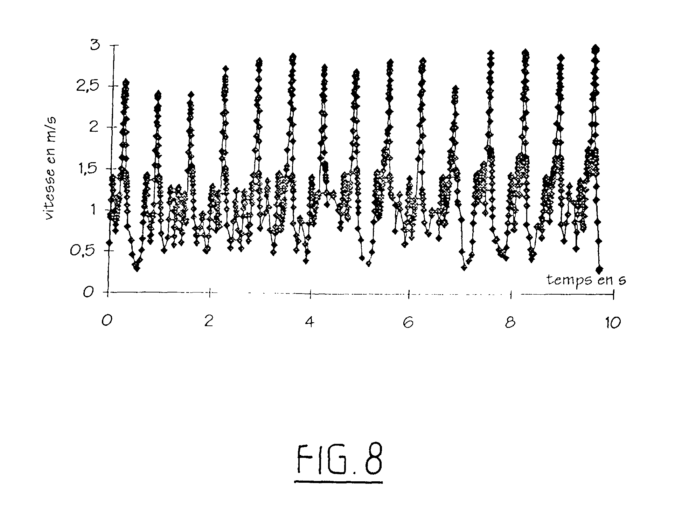

On a représenté, à la Fig. 6, une courbe donnant la vitesse réelle de course d'un coureur à pied en fonction de la vitesse maximale qui a été déterminée comme précédemment. Comme on peut le constater on obtient une droite dont on a pu montrer que l'équation était la suivante:

$$V_{av} = 0,6\, V_{max} - 0,4,$$

les vitesses étant exprimées en mètres/seconde.

On a pu montrer que cette relation est valable pour des vitesses comprises entre 2m/s et 9m/s.

Ce premier mode de réalisation est précis. Par ailleurs, il est possible, comme cela a été mentionné ci-dessus, de mesurer l'angle $\theta$. Cependant, il pose problème du fait de la relative complexité du traitement qui est à mettre en oeuvre. Aussi, préfère-t-on un mode de réalisation d'un appareil qui serait équipé d'une seule antenne, par exemple soit monofaisceau, soit bifaisceau.

On a représenté à la Fig. 6 un second mode de réalisation de l'invention dans laquelle l'unique antenne 11' est à bifaisceau. L'appareil de mesure 10' est également monté sur une chaussure 20 du coureur et son antenne 11' a un premier faisceau incident dirigé vers l'arrière de la chaussure 20 et un second faisceau incident dirigé vers l'avant de la chaussure 20. Il comprend également une unité de traitement et d'acquisition 15.

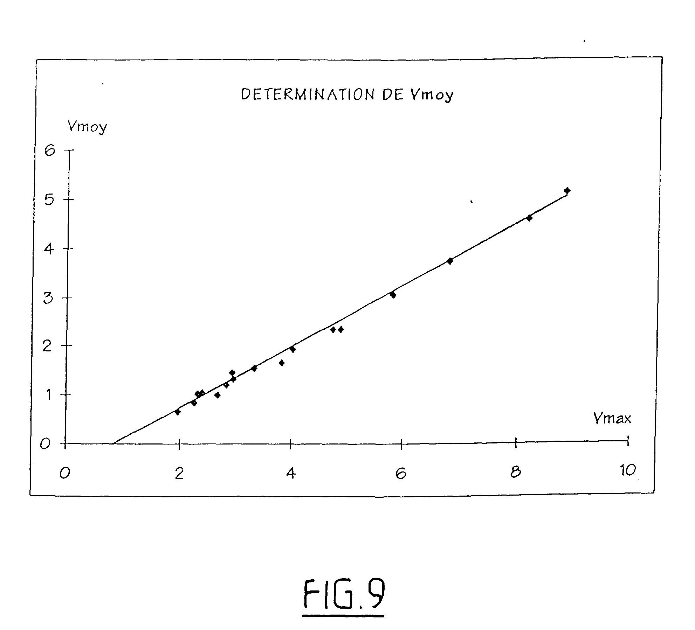

La Fig. 8 montre une courbe expérimentale du module de la vitesse en fonction du temps. On peut constater que chaque double pas est aussi bien marqué qu'avec deux antennes monofaisceau et qu'on peut à la fois mesurer la durée du double pas et le module de la vitesse de chacun d'entre eux. Avec ce système d'antenne bifaisceau, il n'est pas possible de déterminer l'angle $\theta$. Cependant, on a pu constater que lorsque la fréquence Doppler atteint une valeur maximale, le vecteur vitesse du pied se trouve dans l'axe de la chaussure. Il est résulte que l'angle $\theta$ peut être déterminé puisqu'il ne dépend que du montage de l'antenne sur la chaussure.

Les résultats qui vont suivre sont donnés en considérant une valeur de l'angle entre l'axe de la chaussure et le faisceau incident, c'est-à-dire l'angleθ, de 60°.

On montre à la Fig. 6, la courbe expérimentale donnant la vitesse de course en fonction de la vitesse maximale déterminée à partir de la courbe de la Fig. 8. On constate que cette courbe est une droite et l'on a pu montrer que son équation est la suivante :

$$V_{av} = 0,6 \, V_{max} - 0,4$$

On a également pu montrer que la relation affine $V_{av} = a \, V_{max} + b$ était vérifiée pour d'autres valeurs de l'angle entre l'axe de la chaussure et le faisceau incident, avec pour corollaire que les coefficients a et b ont des valeurs différentes.

Dans les exemples de réalisation qui sont décrits dans la présente demande, l'unité 15 délivre un signal de mesure soit à un afficheur (non représenté) qui est porté par le coureur lui-même, soit à un émetteur (également non représenté) qui le transmet à un poste distant.

On notera que l'appareil de mesure de la vitesse selon l'un ou l'autre mode de réalisation peut comporter des moyens de mémorisation des résultats des mesures effectuées, par exemple en fonction du temps de la course effectuée par l'utilisateur.

On notera encore que ledit appareil pourrait être également prévu pour déterminer la distance parcourue lors d'une course effectuée par ledit sportif, cette détermination se faisant par intégration du module de la vitesse mesurée sur la durée de ladite course.

## Revendications

1. Appareil de mesure de la vitesse de course d'un sportif, ledit appareil étant du type qui délivre un signal Doppler à partir d'au moins un faisceau émis et d'au moins un faisceau reçu correspondant audit ou à chaque faisceau émis qui est rétrodiffusé sur le sol, **caractérisé en ce qu'**il est prévu pour être monté de manière fixe sur une partie du corps dudit sportif qui est normalement animée lors de ladite course d'un mouvement cyclique décrit par un vecteur vitesse ($\bar{V}$) changeant au moins en module **en ce qu'**il est prévu pour déterminer à chaque période à partir dudit signal Doppler la valeur maximale du module dudit vecteur vitesse ($\bar{V}$) afin d'en déduire la vitesse de course dudit sportif.

2. Appareil de mesure de la vitesse de course d'un sportif selon la revendication 1, **caractérisé en ce qu'**il est monté sur ou dans une chaussure (20) que porte ledit sportif.

3. Appareil de mesure de la vitesse de course d'un sportif, tel qu'un coureur à pied, selon la revendication 1 ou 2, **caractérisé en ce qu'**il est prévu pour émettre deux faisceaux dans un plan contenant la direction d'avancement dudit sportif.

4. Appareil de mesure de la vitesse de course d'un sportif, selon la revendication 3, **caractérisé en ce que** le signal Doppler est déterminé à partir des fréquences Doppler Fdav et Fdar respectivement dues auxdits faisceaux, par la relation

$$Fd = \frac{2V}{\lambda} = \sqrt{Fdav^2 + \left(\frac{Fdav.\cos\alpha - Fdar}{\sin\alpha}\right)^2}$$

où $\alpha$ est l'angle formé entre lesdits deux faisceaux.

5. Appareil de mesure de la vitesse selon la revendication 3 ou 4, **caractérisé en ce que** lesdits deux faisceaux forment entre eux un angle de $\pi/2$.

6. Appareil de mesure de la vitesse selon une des revendications 1 à 5, **caractérisé en ce que** pour déduire la vitesse de course dudit sportif du module de la vitesse maximale, il utilise la relation affine suivante :

$$V_{av} = a\, V_{max} + b$$

**7.** Appareil de mesure de la vitesse selon la revendication 6, **caractérisé en ce que a** est sensiblement égal à 0,6 et **en ce que b** est sensiblement égal à - 0,4.

**8.** Appareil de mesure de la vitesse de course d'un sportif, tel qu'un coureur à pied, selon la revendication 1 ou 2, **caractérisé en ce qu'**il est prévu pour émettre un seul faisceau dans un plan contenant la direction d'avancement dudit sportif, et **en ce que** pour déduire la vitesse de course dudit sportif, il est prévu pour déterminer la vitesse maximale mesurée $V_{max}$ à partir de la fréquence Doppler $Fd_{max}$ maximale par la relation :

$$Fd_{max} = \frac{2 V_{max}\, \text{COS}\theta}{\lambda}$$

où θ est l'angle entre la direction du faisceau émis par ladite antenne et l'axe de ladite chaussure, et λ la fréquence de travail de ladite antenne, et, **en ce que** pour déduire la vitesse de course dudit sportif du module de la vitesse maximale $V_{max}$, il est prévu pour utiliser la relation affine suivante :

$$V_{av} = a\, V_{max} + b$$

**Patentansprüche**

**1.** Meßgerät für die Laufgeschwindigkeit eines Sportlers, welches Gerät ein Doppler-Signal aus mindestens einem entsandten Strahl und mindestens einem empfangenen Strahl, der dem bzw. jedem entsandten Strahl entspricht, der am Boden rückgestreut wird, liefert, **dadurch gekennzeichnet, daß** es dazu vorgesehen ist, fest auf einem Teil des Körpers des Sportlers montiert zu werden, der bei dem Lauf normalerweise eine zyklische Bewegung ausführt, die durch einen Geschwindigkeitsvektor ($\bar{V}$) beschrieben wird, der sich zumindest hinsichtlich des Moduls verändert, daß es dazu vorgesehen ist, für jeden Zeitraum aus dem Doppler-Signal den Maximalwert des Moduls des Geschwindigkeitsvektors ($\bar{V}$) zu bestimmen, um davon die Laufgeschwindigkeit des Sportlers abzuleiten.

**2.** Meßgerät für die Laufgeschwindigkeit eines Sportlers nach Anspruch 1, **dadurch gekennzeichnet, daß** es auf oder in einem Schuh (20), den der Sportler trägt, montiert ist.

**3.** Meßgerät für die Laufgeschwindigkeit eines Sportlers, wie beispielsweise eines Läufers, nach Anspruch 1 oder 2, **dadurch gekennzeichnet, daß** es dazu vorgesehen ist, zwei Strahlen in eine Ebene auszusenden, die die Laufrichtung des Sportlers enthält.

**4.** Meßgerät für die Laufgeschwindigkeit eines Sportlers nach Anspruch 3, **dadurch gekennzeichnet, daß** das Doppler-Signal aus den Doppler-Frequenzen Fdav bzw. Fdar, die sich auf die Strahlen beziehen, nach dem folgenden Verhältnis bestimmt wird:

$$Fd = \frac{2V}{\lambda} = \sqrt{Fdav^2 + \left(\frac{Fdav.\cos\alpha - Fdar}{\sin\alpha}\right)^2}$$

wobei α der zwischen den beiden Strahlen gebildete Winkel ist.

**5.** Meßgerät für die Geschwindigkeit nach Anspruch 3 oder 4, **dadurch gekennzeichnet, daß** die beiden Strahlen zwischen sich einen Winkel von π/2 bilden.

**6.** Meßgerät für die Geschwindigkeit nach einem der Ansprüche 1 bis 5, **dadurch gekennzeichnet, daß** für die Ableitung der Laufgeschwindigkeit des Sportlers von dem Modul der Maximalgeschwindigkeit folgendes affine

Verhältnis verwendet wird:

$$V_{av} = a\, V_{max} + b$$

**7.** Meßgerät für die Geschwindigkeit nach Anspruch 6, **dadurch gekennzeichnet, daß** a im wesentlichen gleich 0,6 und b im wesentlichen gleich -0,4 ist.

**8.** Meßgerät für die Laufgeschwindigkeit eines Sportlers, wie beispielsweise eines Läufers, nach Anspruch 1 oder 2, **dadurch gekennzeichnet, daß** es dazu vorgesehen ist, einen einzigen Strahl in eine Ebene auszusenden, die die Laufrichtung des Sportlers enthält, und daß es für die Ableitung der Laufgeschwindigkeit des Sportlers dazu vorgesehen ist, die maximal gemessene Geschwindigkeit $V_{max}$ aus der Doppler-Frequenz $Fd_{max}$ durch folgendes Verhältnis zu bestimmen:

$$Fd_{max} = \frac{2V_{max}\,\cos\theta}{\lambda}$$

wobei θ der Winkel zwischen der Ausrichtung des von der Antenne entsandten Strahls und der Achse des Schuhs ist und λ die Betriebsfrequenz der Antenne ist, und daß es für die Ableitung der Laufgeschwindigkeit des Sportlers von dem Modul der maximalen Geschwindigkeit $V_{max}$ dazu vorgesehen ist, das folgende affine Verhältnis zu verwenden:

$$V_{av} = a\, V_{max} + b$$

**Claims**

**1.** A device for the measurement of the racing speed of a sportsperson, the said device being of a type which gives off a Doppler signal from at least one emitted beam and at least one received beam corresponding to the said or to each emitted beam which is backscattered on the ground, **characterised in that** it is intended to be mounted in a fixed fashion on part of the body of the said sportsperson, which is normally driven during the said race by a cyclic movement described by a speed vector (*V*) changing at least in a modular fashion, which is intended to measure at each period from the aforesaid Doppler signal, the maximum value of the module of the said speed vector (*V*) in order to deduce the racing speed of the said sportsperson.

**2.** A device for the measurement of the speed of a sportsperson in accordance with claim 1, **characterised in that** it is mounted on or in a shoe (20) worn by the said sportsperson.

**3.** A device for the measurement of the speed of a sportsperson, such as a runner, in accordance with claim 1 or 2, **characterised in that** it is intended to emit two beams in a plane containing the direction of forward movement of the said sportsperson.

**4.** A device for the measurement of the speed of a sportsperson, in accordance with claim 3, **characterised in that** the Doppler signal is determined from the Fdav and Fdar Doppler frequencies due to the said beams respectively, given by the equation:

$$Fd \;=\; \frac{2V}{\lambda} \;=\; \sqrt{Fdav^2 + \left(\frac{Fdav.\cos\alpha - Fdar}{\sin\alpha}\right)^2}$$

where α is the angle formed between the said two beams.

**5.** A device for the measurement of the speed according to claim 3 or 4, **characterised in that** the said two beams form an angle of $\pi/2$ between them.

6. A device for the measurement of the speed according to claims 1 to 5, **characterised in that** in order to deduce the racing speed of the said sportsperson from the maximum speed module, the following affined equation is used:

$$V_{av} = a\,V_{max} + b$$

7. A device for the measurement of the speed according to claim 6, **characterised in that a** is approximately equal to 0.6 and that **b** is approximately equal to 0.4.

8. A device for the measurement of the speed of a sportsperson such as a runner, in accordance with claims 1 or 2, **characterised in that** it is intended to emit a single beam in a plane containing the direction of forward movement of the said sportsperson and that to deduce the speed of the said sportsperson, provision is made to determine the maximum measured speed $V_{max}$ from the maximum Doppler frequency $Fd_{max}$ using the equation:

$$Fd\,max = \frac{2V_{max}\,COS\theta}{\lambda}$$

in which $\Theta$ is the angle between the direction of the beam emitted by the said antennae and the axis of the said shoe, and $\lambda$ is the working frequency of the said antennae, and in order to deduce the speed of the said sportsperson from the maximum speed module $V_{max}$, provision is made to use the following affined equation:

$$V_{av} = a\,V_{max} + b$$

FIG. 1

FIG. 2

FIG.3

FIG.4

FIG.7

FIG.5

FIG.6

FIG.8

FIG.9